# EUROPEAN PATENT SPECIFICATION

(11) **EP 1 063 893 B1**
(45) Date of publication and mention of the grant of the patent: **26.02.2003**
(21) Application number: 99909105.1
(22) Date of filing: 16.03.1999
(51) Int. Cl.: A22B 3/08

(54) **METHOD AND APPARATUS FOR KILLING AQUATIC ANIMALS**
VERFAHREN UND VORRICHTUNG ZUM ABTÖTEN VON WASSERTIEREN
PROCEDE ET APPAREIL POUR LA DESTRUCTION DES ANIMAUX AQUATIQUES

(30) Priority: 17.03.1998 GB 9805574
(43) Date of publication of application: 03.01.2001
(73) Proprietor: Walker, Sarah Kathleen Elder, Stewarton, Ayrshire KA3 5JZ (GB)
(72) Inventor: Walker, Sarah Kathleen Elder, Stewarton, Ayrshire KA3 5JZ (GB)
(74) Representative: Pacitti, Paolo
(86) International application number: GB9900794
(87) International publication number: WO99046997

(56) References cited:
- WO-A-97/01285
- WO-A-98/44805
- DE-A- 4 216 842

## Description

The present invention relates to a method and apparatus for killing aquatic animals and in particular to a method and apparatus for killing fish.

Conventional methods and apparatus for killing aquatic animals induce high levels of stress in the animal. These high levels of stress are believed to be associated with the release of adrenaline in the animal which tends to have an adverse effect on the texture of the flesh of the animal.

WO9701285 Johnson describes a fish harvesting machine including a chamber. Fish are manually removed from water and placed in the chamber. The machine then operates automatically to slaughter the fish by driving a spike into their brain.

According to a first aspect of the present invention there is provided a method for killing aquatic animals comprising the steps of introducing an animal into a chamber; and making an incision in the animal, characterised in that the method further comprises the steps of guiding the animal through water approximating its natural habitat into the chamber; stunning the animal in the water by applying an impact prior to making the incision; and allowing the animal's heart to pump blood out through the incision.

Preferably the method includes operating stunning means to direct a projectile ac the animal.

Typically the stunning means is actuated by detection of the presence of the animal in the chamber.

The method may comprise the step of allowing substantially all of the blood to drain from the animal substantially immediately after stunning.

The method may comprise the step of tagging the animal.

According to a second aspect of the present invention there is provided apparatus for killing aquatic animals comprising a chamber; drive means adapted to propel a projectile cowards an animal in the chamber; and cutting means, characterised in that the chamber is adapted to receive an animal in water approximating its natural habitat; and that said apparatus further comprises a stunning mechanism comprising said projectile; and that said projectile is adapted to stun but not to kill said animal.

Preferably the apparatus further comprises an entry conduit in communication with the chamber; and an outlet in communication with the chamber.

Typically the entry conduit and/or the chamber are substantially filled with water.

The apparatus may comprise a sensor or sensors for detecting the presence of an animal in the chamber.

In a preferred embodiment the entry conduit comprises a resilient contractible conduit portion which is reversibly contractible to occlude entry to or exit from the chamber. Preferably the apparatus comprises a closure member adapted to close the resilient contractible conduit when a sensor detects the presence of an animal in the chamber.

Typically the chamber includes cutting means adapted to make an incision in an animal in the chamber.

Preferably the apparatus comprises a channel for drainage of blood from the animal. More preferably the apparatus further comprises a carousel comprising a plurality of pockets mounted on a conveyor belt.

The apparatus may comprise tagging means.

Typically the inner walls of the chamber are lined with a resilient rubber-like material.

Embodiments of the present invention will now be described, by way of example only, in which:

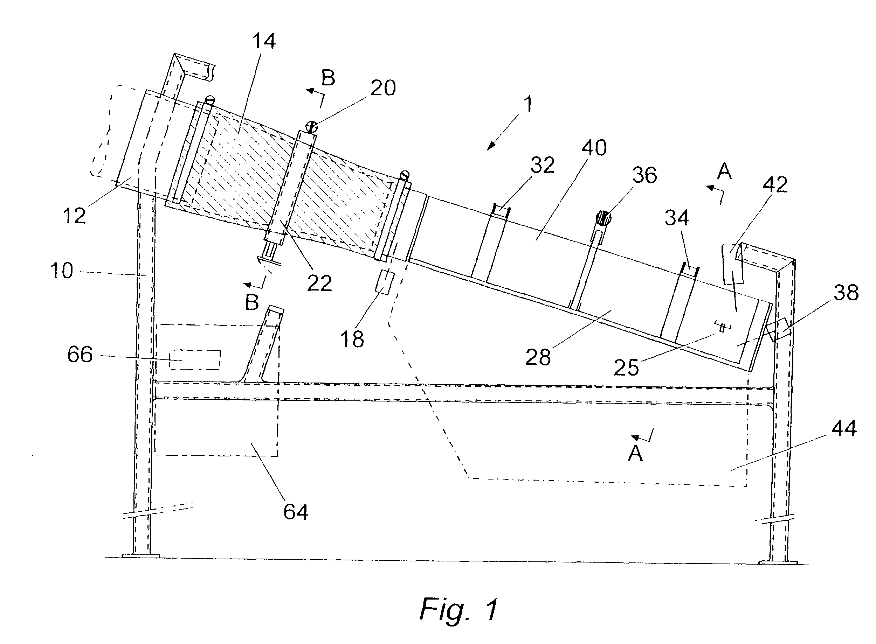

Fig 1 is a side elevation of an apparatus in accordance with an aspect of the present invention;
Fig 2 is a sectional view through section A-A of Fig 1;
Fig 3 is a sectional view through section B-B of Fig 1;
Fig 4 is a plan view of a carousel for use with the apparatus of Fig 1;
Fig 5 is a side elevation of an embodiment of an apparatus of the invention including a carousel; and
Fig 6 is a plan view of the apparatus of Fig 5.

Referring to the drawings, an exemplary processing apparatus of the present invention is generally designated 1.

The apparatus 1 comprises an inlet conduit 12, an entry conduit 14, a closure mechanism 16, and a stunning chamber 40 having an exit gate 28. The closure mechanism 16 comprises an air operated cylinder 20 and a closure member 22.

In this embodiment the apparatus 1 is mounted on a frame structure 10 which may, for example, be 50 mm square section although any suitable frame structure may be used. If the apparatus 1 is for use on a moveable surface, for example on board a vessel, the structure 10 has additional supporting feet as required.

The first end of the inlet conduit 12 (not shown) is adapted for connection to an air lift outlet from an air pump (not shown) or an outlet of a fish grader (not shown). Additionally or alternatively the apparatus 1 itself comprises a large holding tank (not shown) Alternatively the inlet conduit 12 is adapted for coupling to existing apparatus in fish farms or the like, such as apparatus which brings fish from holding tanks or cages to a higher level. For example, a fish pump may be used to deliver fish gently to the inlet conduit 12.

In an embodiment where the apparatus 1 comprises a holding tank, the apparatus further includes means such as a paddle or an airjet (not shown) to create turbulence in or near the first end of the inlet conduit 12. The purpose of creating such turbulence is to attract fish into inlet conduit 12.

The first end of the inlet conduit 12 is at a higher level than the exit gate 28, and the apparatus 1 slopes to facilitate progress of fish therethrough.

The inlet conduit 12 is connected at a second end to an entry conduit 14. The entry conduit 14 is substantially of rubber, and may be manufactured from LATEX (RTM) rubber or the like.

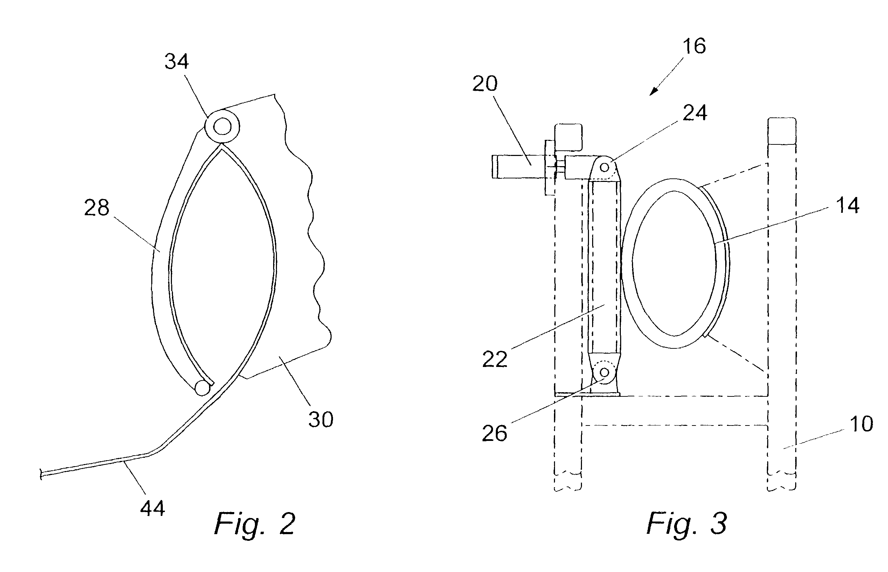

The inlet conduit 12 and entry conduit 14 are filled with water so that fish may breathe and remain substantially undisturbed and undamaged during passage therethrough. As an additional refinement, in this embodiment the entry conduit 14 is oval in cross-section, as illustrated in Fig 3, to orientate fish in a vertical, upright position.

The entry conduit 14 leads into a first end of the stunning chamber 40.

The entry conduit 14 includes the closure mechanism, generally designated 16, best shown in Fig 3. The closure mechanism includes the actuation cylinder 20 which, when signalled to do so, operates the closure member 22 to occlude the entry conduit 14.

A sensor 18 is positioned at the entry of the stunning chamber 40. The sensor 18 may be optical, electrical or mechanical. One purpose of the sensor 18 is to register the presence of a fish as it passes from the entry conduit 14 into the stunning chamber 40.

The sensor 18 performs a number of functions. In the first instance, it detects the entry of a fish into the stunning chamber 40, and emits a signal to trigger the operation of the cylinder 20 and thus the closure mechanism 16.

The closure member 22 is hingedly coupled at a first end 24 to cylinder 20, and at a second end 26 to the frame 10. When actuated by the sensor 18, the cylinder 20 operates the closure member 22 to deform the entry conduit 14, and thus to occlude the conduit 14 in order that fish cannot pass therethrough. This closure mechanism 16 prevents more than one fish entering the stunning chamber 40 at a time. It also blocks the exit of the captive fish in the stunning chamber 40.

At the end of one cycle the closure mechanism 16 is deactivated and the closure member 22 returns to its original position. When no longer held closed, the resilience of the rubber returns the entry conduit 14 to its original configuration.

As an optional feature the sensor 18 sends a signal to a recording means which keeps a record of the number of fish which pass the sensor 18. In this particular embodiment the apparatus 1 exhibits gathered data on a display 66 mounted on a control panel 64, which will be described hereafter.

The stunning chamber 40 is a water filled trough. The stunning chamber 40 comprises a sensor 38, a stunning mechanism 42 and a cutting mechanism. The sensor 38 is situated at a second end of the stunning chamber 40. The apparatus 1 is designed to deliver a fish to a predetermined position for stunning. This predetermined position is achieved when the head of the fish reaches the second end of the stunning chamber 40.

The stunning mechanism 42 is set to operate when the sensor 38 at the second end of the stunning chamber 40 is tripped.

The sensor 38 is optical, electrical or mechanical. When the sensor is tripped by the presence of the fish in the requisite position, it activates the stunning mechanism 42.

The stunning mechanism 42 comprises a pneumatically operated rubber weight mounted on the frame 10. When the stunning mechanism 42 is triggered, the weight drops to the precalculated position where it is expected the head of the fish will be, to deliver a blow to the head of the fish. The stunning mechanism 42 alternatively includes pistons which, when the mechanism 42 is activated, are driven to the expected position of the head of the fish, rather than falling under gravity.

The cutting mechanism 25 in the form of a knife or retractable blade is also activated by the sensor 38. The sensor 38 activates the cutting mechanism 25 after the stunning mechanism 42. The cutting mechanism 25 acts to slit the gills of the fish. The blade of the cutting mechanism 25 is operated hydraulically, for example by a cylinder.

The stunning chamber 40 further comprises an exit gate 28 actuated by an operating cylinder 36. This cylinder 36 is also activated by the sensor 38. The exit gate 28 is secured to a backplate 30 by two hinges 32, 34 which allow gate 28 to pivot, facilitating its opening and closure. The backplate 30 is attached to the frame 10 by any suitable means such as a bracket (not shown). The stunning chamber 40 is substantially formed from the backplate 30 and exit gate 28, as best shown in Fig 2. The internal faces of the plate 30 and exit gate 28 are substantially covered with rubber to prevent damage to the fish. The rubber may be LATEX (RTM) or the like.

The exit gate 28 leads to an exit chute 44. After operation of the cutting mechanism, the sensor 38 actuates the cylinder 36 to open exit gate 28 for communication of the stunning chamber 40 with the exit chute 44.

When the sensor 38 no longer senses the presence of a fish, cylinder 36 is deactivated to close the exit gate. Closure of the exit gate 28 resets the apparatus, and unblocks entry conduit 14. That is, closure mechanism 16 is deactivated, closure member 22 retracts, and the resilient entry conduit 14 reverts to its original configuration.

The apparatus is designed to be mounted over a catchment trough (not shown) which collects overflow water which can be recirculated into the system. Where logistically possible, the catchment trough is situated below a grille in the floor.

The operating part of the apparatus is enclosed within guards to avoid the risk of injury to operating personnel from the cutting or stunning mechanisms. These guards are removable for access to the apparatus for cleaning, maintenance or other purposes.

At the termination of the chute 44 there is provision to accommodate a box or container for the collection of the output of the apparatus, namely fish, for transportation to a processing plant for further processing, such as gutting, grading, boxing and despatch.

Since it is desirable that the fish are substantially drained of blood before being deposited in containers, the apparatus 1 has the optional feature at the end of the exit chute 44 of a sloped rest (not shown) above a trough (not shown). Blood from fish deposited on the rest drains into the trough. The trough has a channel in fluid communication with a tank or other receptacle for collection of the blood. The collected blood is used as fertiliser or the like, or disposed of responsibly to prevent pollution.

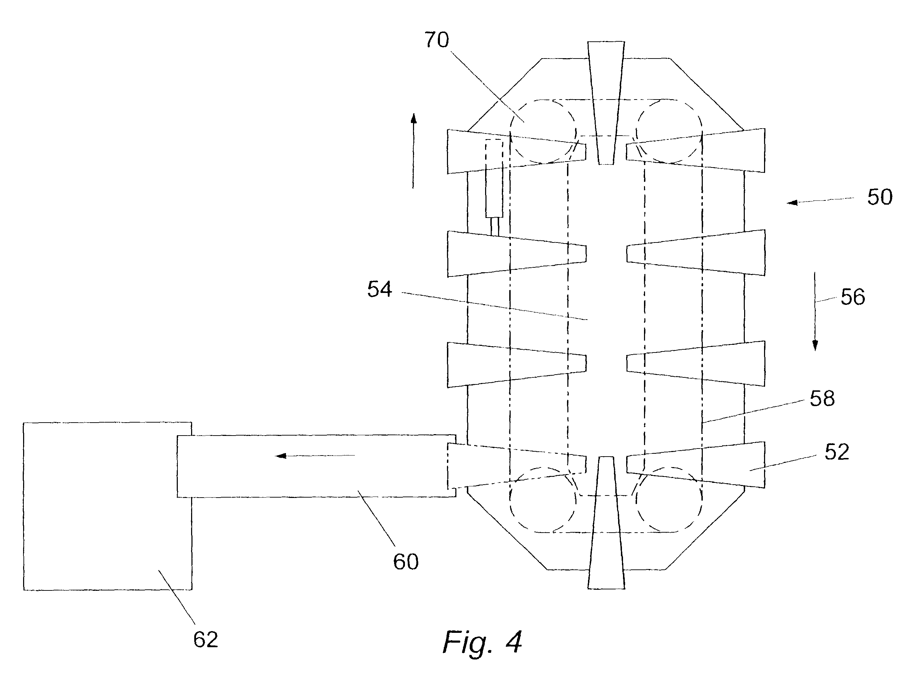

Alternatively a rotating carousel 50, shown in Fig 4, is an optional element of the apparatus. That is, the carousel is a stand alone piece of apparatus which may be incorporated in the apparatus of the present invention.

The carousel 50 is mounted on a separate frame 68. The carousel 50 has a plurality of pockets 52 to which the chute 44 delivers fish. The pockets 52 of the carousel 50 support the fish substantially vertically, are orientated to point downwards and have an opening at the bottom. A holding tank 54 is housed below the level of carousel 50. Blood from the fish drains into the tank 54 through the openings in the pockets 52.

The carousel 50 is rotated in the direction of arrow 56 by a drive chain 58 moved by a motor (not shown), using drive sprockets 70. The motor may, for example, be hydraulic.

The radius of carousel 50 and/or its speed of rotation are selected so that the time taken for one revolution is the time required to allow substantially all of the blood from the fish to drain into the holding tank 54. The collected blood is used as fertiliser or the like, or disposed of responsibly to prevent pollution.
In one embodiment of the carousel 50 the pockets 52 are adapted to tip at the end of one revolution of the carousel 50. That is, a pocket 52 is adapted to eject a fish at the point where it is calculated that the fish is substantially drained of blood.

A conveyor belt 60 can be situated adjacent the carousel 50 to receive the contents of the pockets 52. Alternatively the pockets 52 are adapted to tip their contents directly into containers.

The belt 60 incorporates an optional tagging system. (not shown) which includes a sensor for detecting the weight of the fish. The system produces a tag which includes information such as batch number, weight and a specific barcode, and attaches the tag to a fish for identification purposes.

The conveyor belt 60 conveys the output of the apparatus to a holding tank or container 62. The container 62 is then transported to a processing plant for further processing as previously described.

The apparatus is controlled from a control panel 64 which operates from a 24 volt DC supply. The control panel 64 includes a display 66 and receives a signal generated by sensor 18. Although the control panel 64 is shown mounted on frame 10 of the apparatus, it can be positioned elsewhere on the frame 10, or at a remote location. Remote operation is beneficial where multiple processing apparatus are in use in one location It is possible to operate a system of apparatus from a single control panel, utilising known control systems.

The apparatus can be computer controlled and application specific software used to control its operation and timing of the system.

The method of the invention comprises a cyclical process of killing fish, wherein one cycle comprises delivering a fish to the first end of the inlet conduit 12 of the apparatus 1 by means of a fish pump or the like, which step may include creating turbulence in or near the entrance to the conduit 12 to attract the fish into the apparatus 1.

At this point the fish is underwater and oblivious to its imminent demise. That is, since the inlet conduit 12 is filled with water, the fish breathes and remains substantially undisturbed and undamaged during its passage through the conduit 12 into the entry conduit 14, which is also full of water. The fish is held in a vertical, upright position by the oval cross-section of the entry conduit 14.

As the fish leaves the entry conduit 14 and enters the stunning chamber 40 it passes the sensor 18. The stunning chamber 40 also contains water. This sensor 18 records the number of fish which pass. The sensor 18 triggers the closure mechanism 16 to close off the entrance to the stunning chamber 40, to prevent the fish from escaping back into the entry conduit 14 , and any more fish from entering the chamber 40.

When the fish reaches the far end of the stunning chamber, its presence is recognised by the sensor 38 and initiates a chain of events. That is, the apparatus 1 is designed to deliver a fish to a predetermined position, and the sensor 38 appreciates when the fish is in this required position and initiates its processing.

Firstly, the sensor 38 activates the stunning mechanism 42 which drops a weight to, or drives a piston at, the expected position of the head of the fish to stun the fish. Stunning the fish prior to slitting its gills ensures that the fish is subjected to the minimum of stress.

Next the sensor 38 activates the cutting mechanism 25 to slit the gills of the fish.

The fish then is allowed to bleed and, since the living heart actively pumps blood from the body until death occurs, bleeding will progress quickly, especially if the fish is held substantially vertical.

This method of removing blood offers the added advantage of reducing the likelihood of blood spotting in the flesh of the fish.

Next the sensor 38 initiates the opening of exit gate 28 and the fish exits the chamber 40 down exit chute 44.

Finally, once the fish is expelled, the exit gate 28 closes.

Closure of the exit gate 28 resets the apparatus, the closure mechanism 16 is deactivated, and the resilience of the rubber returns the entry conduit 14 to its original configuration, and the cycle is repeated.

The fish is deposited into a box or container for transportation to a processing plant for further processing such as gutting, grading, boxing and despatch.

However since it is desirable that, prior to being deposited in such a container it is substantially drained of blood, the fish is firscly allowed to bleed. For this purpose the fish is removed either to a rest from where the blood excreted drains into a trough for collection in a receptacle, or to a rotating carousel 50 with pockets 52 which support the fish substantially vertically, are orientated to point downwards and have an opening at the bottom which allows the blood excreted to drain into a receptacle. One revolution of the carousel is timed to be sufficient to substantially empty the fish of blood. The collected blood is used as fertiliser or the like, or disposed of responsibly to prevent pollution.

At the end of the revolution - at which point the blood is virtually exhausted - the fish is tipped out of the pocket, either directly into a container or onto a conveyor belt 60 leading to a container. On the belt, the tail of the fish is tagged with information such as batch number, weight and a specific barcode for identification purposes, before transportation for further processing.

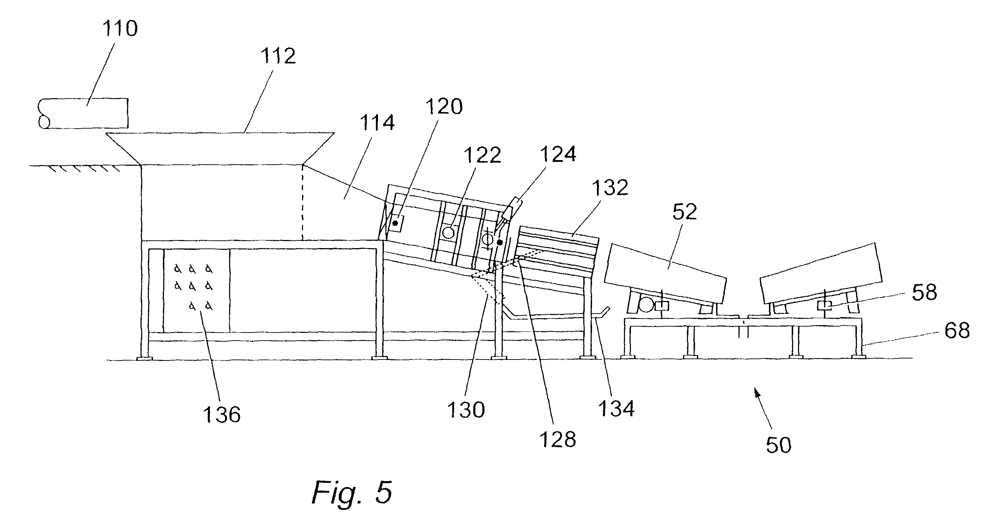

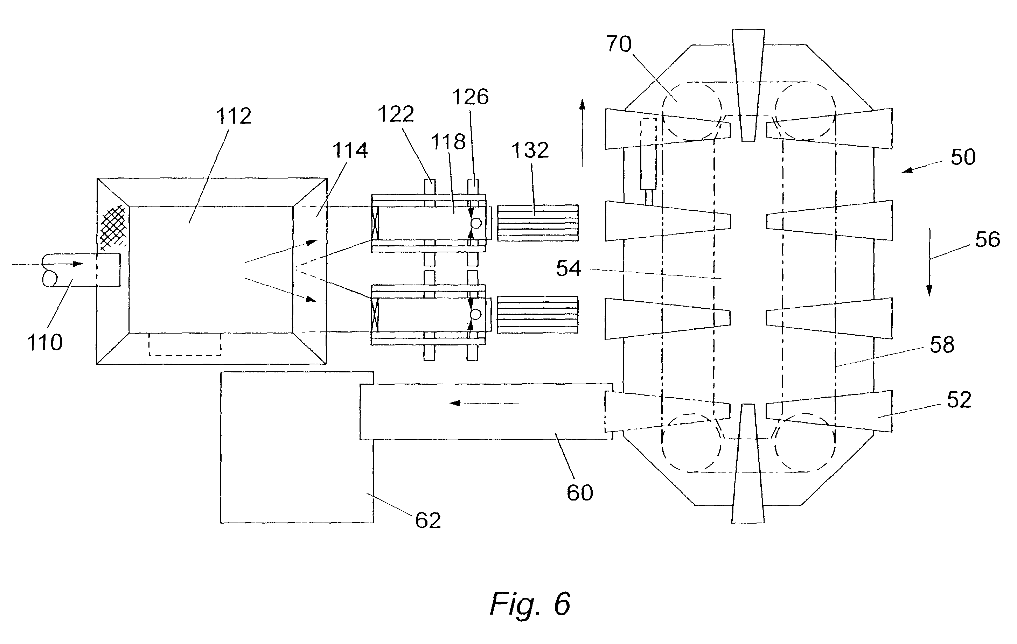

Figs 5 and 6 show a further embodiment of an apparatus of the present invention. This embodiment includes a delivery tube 110 in connection with a holding tank 112 having baffles 114 and an exit gate 116. The holding tank 112 is in communication with a stunning chamber 118 containing a sensor 120. The sensor 120 can be electrical, optical or mechanical. The stunning chamber contains a stunning mechanism and a killing mechanism and an exit gate 128 leading to a dewatering unit 132.

Fish are delivered to the apparatus by a delivery tube 110 which feeds into a holding tank 112. The delivery tube 112 is, for example, the outlet of a fish pump, or any other existing equipment.

The holding tank 112 is manufactured from stainless steel. The tank 112 is provided with an overflow grille or the like to permit drainage of excess water. The exit gate 116 of the tank 112 is in communication with the stunning chamber 118. The tank 112 has shaped baffles 114 to encourage a fish towards the exit gate 116. Additionally or alternatively turbulence is created at exit 116 to attract a fish and encourage it to enter the chamber 118.

The stunning chamber 118 is a water-filled trough which has a removable guard as previously described. The chamber 118 is lined with rubber.

When the sensor 120 is tripped by a fish entering the chamber 118, it initiates four mechanisms in sequence:
1. a closure mechanism;
2. a stunning mechanism;
3. a killing mechanism; and
4. an exit mechanism.

The closure mechanism comprises the latex lining of the chamber 118. This mechanism is initiated by hydraulic cylinders 122 which are activated by the sensor 120. The cylinders 122 act to decrease the inner circumference of the chamber 118 until it reaches a closed position. In closed position, the chamber encloses an occupant, holding it upright.

The stunning mechanism comprises a rubber weight suspended from a cylinder 124. The cylinder 124 is actuated by the sensor 120 to release the weight to a predetermined point.

The killing mechanism comprises a pair of cylinders 126, and blades incorporated into the rubber lining of the chamber 118. The cylinders 126 actuate the blades when triggered by the sensor 120.

The sensor 120 finally triggers the actuation of a further cylinder 130 to open the exit gate 128. The exit gate 128 leads from the stunning chamber 118 to the pockets 52 of the carousel 50, the configuration and operation of which is as previously described.

It is understood that components of any embodiment of the apparatus described as hydraulically operated may alternatively be operated pneumatically, and that components of any embodiment of the apparatus described as pneumatically operated may alternatively be operated hydraulically.

The apparatus further comprises a de-watering unit 132. The apparatus is water-filled to this point, and operations before this point take place underwater or substantially underwater. The de-watering unit 132 drains water into a catchment trough 134 positioned under the unit 132, for recirculation.

Operation of the system is controlled from and monitored on control panel 136, either provided on the apparatus or elsewhere, for example in an adjacent hut or building.

The method of this aspect of the present invention comprises providing a fish to the delivery tube 110 of the apparatus from which it is delivered to the holding tank 112 and thence to the stunning chamber 118, encouraged there by turbulence at the exit 116.

When the fish enters the stunning chamber its presence there firstly initiates closure of the chamber around it, holding it upright; then its stunning by a stunning mechanism; followed by its killing by the slitting of the isthmus of its gills; and finally the opening of an exit to allow its exit from the chamber.

That is, firstly, the latex lining of the chamber 118 is closed tightly around the fish, thereby holding it in an upright position. Hydraulic cylinders 122 are one means of initiating this closure.

Secondly, the stunning mechanism in the form of a rubber weight suspended from a cylinder 124 operates to stun the fish. Actuation of cylinder 124 releases the weight, and the fish is positioned such that the released weight hits its head to stun it.

Thirdly, the killing mechanism is actuated. In this embodiment the killing mechanism is a pair of cylinders 126 and blades built into the rubber lining of the chamber 118. Operation of the cylinders 126 actuates the blades to cut the isthmus of the gills of the fish held in the chamber.

Once the gills have been cut, actuation of a further cylinder 130 opens the exit gate 128. Until this point, operations have taken place underwater or substantially underwater. The fish then passes through the de-watering unit 132. Water drains into the catchment trough 134 for recirculation.

The fish is then propelled into a pocket 52 of the carousel 50. The configuration and operation is as previously described. The fish is allowed to excrete substantially all of its blood, and is then tagged and collected for transportation for further processing.

Thus is provided an apparatus and method of killing aquatic animals which offers the advantage that the quality of the fish flesh is increased by reducing the stress level of the fish just prior to death. Fish are brought to the point of death with as little stress as possible to reduce the release of adrenaline and its concomitant adverse affects on the texture of the flesh. That is, stress influences osmosis in the flesh of the fish. Stressed flesh does not easily absorb salt. This makes the flesh difficult to smoke or to cure.

The apparatus and method offers the additional advantages that fewer personnel than for conventional methods and apparatus are required to operate the instant invention, and that less ice slurry is required, thereby reducing production costs.

The principal of the apparatus is to maintain the fish in their natural habitat - that is, underwater - for as long as possible before being stunned and then killed.

Modifications and improvements may be made to the foregoing without departing from the scope of the present invention as defined by the appended claims.

## Claims

1. A method for killing aquatic animals comprising the steps of introducing an animal into a chamber (40); and making an incision in the animal, **characterised in that** the method further comprises the steps of guiding the animal through water approximating its natural habitat into the chamber (40, 118); stunning the animal in the water by applying an impact prior to making the incision; and allowing the animal's heart to pump blood out through the incision.

2. A method as claimed in Claim 1 further comprising the step of operating stunning means (42, 124) to direct a projectile at the animal.

3. A method as claimed in Claim 2 wherein the stunning means (42, 124) is actuated by detection of the presence of the animal in said chamber (40, 118).

4. A method as claimed in any preceding claim further comprising the step of allowing substantially all of the blood to drain from the animal substantially immediately after stunning.

5. A method as claimed in any preceding claim further comprising the step of tagging the animal.

6. Apparatus (1) for killing aquatic animals comprising: a chamber (40, 118); drive means(124) adapted to propel a projectile towards an animal in the chamber; and cutting means, **characterised in** chat the chamber (40, 118) is adapted to receive an animal in water approximating its natural habitat; and that said apparatus further comprises a stunning mechanism (42) comprising said projectile; and that said projectile is adapted to stun but not to kill said animal.

7. Apparatus (1) as claimed in Claim 6 further comprising an entry conduit (14) in communication with the chamber; and an outlet (28) in communication with the chamber.

8. Apparatus (1) as claimed in Claim 7 wherein the entry conduit (14) and/or the chamber (42) are substantially filled with water.

9. Apparatus (1) as claimed any preceding claim comprising a sensor (38, 120) or sensors for detecting the presence of an animal in the chamber (40, 118).

10. Apparatus (1) as claimed in any of Claims 7 to 9 wherein the entry conduit (14) comprises a resilient contractible conduit portion which is reversibly contractible to occlude entry to or exit from the chamber (40, 118).

11. Apparatus (1) as claimed in any preceding claim wherein the apparatus (1) comprises a closure member (22) adapted to close the resilient contractible conduit portion when a sensor detects the presence of an animal in the chamber (40, 118).

12. Apparatus (1) as claimed in any preceding claim wherein the chamber (40, 118) includes cutting means adapted to make an incision in the animal in the chamber.

13. Apparatus (1) as claimed in any preceding claim further comprising a channel for drainage of blood from the animal.

14. Apparatus (1) as claimed in any preceding claim further comprising a carousel (50) comprising a plurality of pockets (52) mounted on a conveyor belt (60).

15. Apparatus (1) as claimed in any preceding claim comprising tagging means.

16. Apparatus (1) as claimed in any preceding claim wherein the inner walls of the chamber (40, 118) are lined with a resilient rubber-like material.

## Patentansprüche

1. Ein Verfahren zum Töten von Wassertieren, bestehend aus den Schritten des Einführens eines Tieres in eine Kammer (40); und des Anbringens eines Einschnitts an dem Tier, **dadurch gekennzeichnet, dass** das Verfahren ferner aus den Schritten des Führens des Tieres durch sich seinem natürlichen Habitat annäherndes Wasser in die Kammer (40, 118); des Betäubens des Tieres in dem Wasser, indem vor dem Anbringen des Einschnitts ein Stoß angewandt wird; und des Ermöglichens, dass das Tierherz Blut durch den Einschnitt herauspumpt, besteht

2. Verfahren gemäß Anspruch 1, ferner bestehend aus dem Schritt des Betätigens des Betäubungsmittels (42, 124), um ein Geschoss auf das Tier zu richten.

3. Verfahren gemäß Anspruch 2, wobei das Betäubungsmittel (42, 124) durch das Erfassen der Anwesenheit des Tieres in der Kammer (40, 118) betätigt wird.

4. Verfahren gemäß einem der vorhergehenden Ansprüche, ferner bestehend aus dem Schritt, dass das Tier im Wesentlichen umgehend nach der Betäubung im Wesentlichen ausbluten gelassen werden kann.

5. Verfahren gemäß einem der vorhergehenden Ansprüche, ferner bestehend aus dem Schritt des Markierens des Tieres.

6. Eine Vorrichtung (1) zum Töten von Wassertieren, bestehend aus: einer Kammer (40, 118); einem Antriebsmittel (124), das ausgeführt ist, um ein Geschoss in Richtung eines Tieres in der Kammer zu treiben; und einem Schneidemittel, **dadurch gekennzeichnet, dass** die Kammer (40, 118) ausgeführt ist, um ein Tier in sich seinem natürlichen Habitat annähernden Wasser aufzunehmen; und dass die Vorrichtung ferner aus einem Betäubungsmechanismus (42) besteht, der aus dem Geschoss besteht; und dass das Geschoss ausgeführt ist, um das Tier zu betäuben, aber nicht zu töten.

7. Vorrichtung (1) gemäß Anspruch 6, ferner bestehend aus einem mit der Kammer in Verbindung stehenden Eingangsrohr (14); und einem mit der Kammer in Verbindung stehenden Auslass (28).

8. Vorrichtung (1) gemäß Anspruch 7, wobei das Eingangsrohr (14) und/oder die Kammer (42) im Wesentlichen mit Wasser gefüllt sind.

9. Vorrichtung (1) gemäß einem der vorhergehenden Ansprüche, bestehend aus einem Sensor (38, 120) oder Sensoren zur Erfassung der Anwesenheit eines Tieres in der Kammer (40, 118).

10. Vorrichtung (1) gemäß einem der Ansprüche 7 bis 9, wobei das Eingangsrohr (14) aus einem elastischen, zusammenziehbaren Rohrabschnitt besteht, der reversierbar zusammenziehbar ist, um den Eingang zu der Kammer (40, 118) oder den Ausgang aus dieser zu versperren.

11. Vorrichtung (1) gemäß einem der vorhergehenden Ansprüche, wobei die Vorrichtung (1) aus einem Verschlusselement (22) besteht, das ausgeführt ist, um den elastischen, zusammenziehbarer Rohrabschnitt zu verschließen, sobald ein Sensor die Anwesenheit eines Tieres in der Kammer (40, 118) erfasst.

12. Vorrichtung (1) gemäß einem der vorhergehenden Ansprüche, wobei die Kammer (40, 118) ein Schneidemittel umfasst, das ausgeführt ist, um einen Einschnitt an dem Tier in der Kammer anzubringen.

13. Vorrichtung (1) gemäß einem der vorhergehenden Ansprüche, ferner bestehend aus einem Kanal zum Ablaufen-Lassen des Bluts aus dem Tier.

14. Vorrichtung (1) gemäß einem der vorhergehenden Ansprüche, ferner bestehend aus einer Kreisbahn (50), die aus einer Vielzahl von auf einem Förderband (60) montierten Taschen (52) besteht.

15. Vorrichtung (1) gemäß einem der vorhergehenden Ansprüche, bestehend aus einem Markierungsmittel.

16. Vorrichtung (1) gemäß einem der vorhergehenden Ansprüche, wobei die Innenwände der Kammer (40, 118) mit einem elastischen, kautschuckähnlichen Material ausgelegt sind.

## Revendications

1. Un procédé pour tuer des animaux aquatiques comprenant les étapes consistant à introduire un animal dans une chambre (40) ; et à pratiquer une incision sur l'animal, **caractérisé en ce que** le procédé comprend de plus les étapes consistant à guider l'animal jusqu'à l'intérieur de la chambre (40, 118) dans de l'eau se rapprochant de son habitat naturel ; à assommer l'animal dans l'eau par application d'un impact avant de pratiquer l'incision ; et à laisser le coeur de l'animal expulser du sang au travers de l'incision.

2. Un procédé tel que revendiqué dans la revendication 1 comprenant de plus l'étape consistant à activer on moyen assommoir (42, 124) pour diriger un projectile sur l'animal.

3. Un procédé tel que revendiqué dans la revendication 2 dans lequel le moyen assommoir (42, 124) est actionné par la détection de la présence de l'animal dans ladite chambre (40, 118).

4. Un procédé tel que revendiqué dans n'importe quelle revendication précédente comprenant de plus l'étape consistant à laisser sensiblement tout le sang s'écouler hors de l'animal sensiblement immédiatement après qu'il a été assommé.

5. Un procédé tel que revendiqué dans n'importe quelle revendication précédente comprenant de plus l'étape consistant à étiqueter l'animal.

6. Appareil (1) pour tuer des animaux aquatiques comprenant : une chambre (40, 118); des moyens d'entraînement (124) adaptés pour propulser un projectile en direction d'un animal dans la chambre ; et des moyens de coupe, **caractérisé en ce que** la chambre (40, 118) est adaptée pour recevoir un animal dans de l'eau qui se rapproche de son habitat naturel ; et **en ce que** ledit appareil comprend de plus un mécanisme assommoir (42) comprenant ledit projectile ; et **en ce que** ledit projectile est adapté pour assommer mais ne pas tuer ledit animal.

7. Appareil (1) tel que revendiqué dans la revendication 6 comprenant de plus une conduite d'entrée (14) en communication avec la chambre ; et une sortie (28) en communication avec la chambre.

8. Appareil (1) tel que revendiqué dans la revendication 7 dans lequel la conduite d'entrée (14) et/ou la chambre (42) sont sensiblement remplies d'eau.

9. Appareil (1) tel que revendiqué dans n'importe quelle revendication précédente comprenant un capteur (38, 120) ou des capteurs pour détecter la présence d'un animal dans la chambre (40, 118).

10. Appareil (1) tel que revendiqué dans n'importe lesquelles des revendications 7 à 9 dans lequel la conduite d'entrée (14) comprend une portion de conduite pouvant être contractée élastique qui peut être contractée réversiblement de manière à obstruer l'entrée ou la sortie de la chambre (40, 118).

11. Appareil (1) tel que revendiqué dans n'importe quelle revendication précédente dans lequel l'appareil (1) comprend un organe de fermeture (22) adapté pour fermer la portion de conduite pouvant être contractée élastique lorsqu'un capteur détecte la présence d'un animal dans la chambre (40, 118).

12. Appareil (1) tel que revendiqué dans n'importe quelle revendication précédente dans lequel la chambre (40, 118) comporte des moyens de coupe adaptés pour pratiquer une incision sur l'animal dans la chambre.

13. Appareil (1) tel que revendiqué dans n'importe quelle revendication précédente comprenant de plus un canal pour l'évacuation de sang provenant de l'animal.

14. Appareil (1) tel que revendiqué dans n'importe quelle revendication précédente comprenant de plus un carrousel (50) comprenant une pluralité de poches (52) montées sur une courroie transporteuse (60).

15. Appareil (1) tel que revendiqué dans n'importe quelle revendication précédente comprenant des moyens d'étiquetage.

16. Appareil (1) tel que revendiqué dans n'importe quelle revendication précédente dans lequel les parois internes de la chambre (40, 118) sont revêtues d'un matériau semblable à du caoutchouc élastique.
